Europäisches Patentamt

European Patent Office

Office européen des brevets

(11) Numéro de publication: **0 280 838**

**A1**

(12)
# DEMANDE DE BREVET EUROPEEN

(21) Numéro de dépôt: 87870155.6

(22) Date de dépôt: 03.11.87

(51) Int. Cl.⁴: **C02F 1/46**

(30) Priorité: 13.02.87 BE 8700116

(43) Date de publication de la demande:
07.09.88 Bulletin 88/36

(84) Etats contractants désignés:
BE CH DE ES FR GB IT LI LU NL

(71) Demandeur: **Van wezemael Elinko**
**13 avenue de la princesse**
**B-7358 Bernisart(BE)**

(72) Inventeur: **Van wezemael Elinko**
**13 avenue de la princesse**
**B-7358 Bernisart(BE)**

(54) **Anti-calcaire électronique ionique.**

(57) La présente invention consiste en un émetteur de radiofréquence appliqué à une tige en métal isolée sur toute sa surface immergée afin de créer un champ d'électrons libres autour de celle-ci.

L'eau passant à proximité de ladite tige voit la structure de ses cristaux de calcaire modifiée afin de les rendre inadhérents même à 80°C.

La présente invention consiste en un modèle de pièce plastique qui a les propriétés d'avoir les orifices de passage d'eau dirigés par le bas, ce qui rend ce modèle ainsi que son flotteur insensibles aux impuretés contenues dans l'eau.

Fig. 2

# ANTI-CALCAIRE ELECTRONIQUE IONIQUE

La présente invention consiste en l'application d'onde électromagnétique appliquée à une conçeption mécanique paraticulière du bloc de traitement de l'eau, cette conçeption visant la disposition d'une tige en métal conducteur isolée électriquement sur toute sa surface imergée au sein d'un cylindre de matière plastique dans laquelle circule l'eau traitée,afin de neutraliser les effects incrustant du calcaire contenu dans celle-ci dans une plage de température de 0 à plus de 80 C°.

Cette conception visant également l'élaboration d'un flotteur de détection de passage d'eau le rendant autonettoyant et antiblocant vis à vis des impuretées contenues dans l'eau traitée.

La présente invention conçerne plus particulièrement les appareils de traitements d'eaux dans lesquels les corps susceptibles de provoquer l'entartrage des canalisations subissent une action de nature à inhiber la formation des dépots incrustants et à favoriser l'élimination des susdits sous forme de boue.

Dans les appareils connus de ce type,la méthode employée pour la neutralisation est notamment le traitement de l'eau par application de courant alternatif ou de courant continu sur deux électrodes de traitement imergées dans le liquide à traiter.

Cette technique présente donc comme inconvénients:

-le traitement devient inéficace sur de l'eau traitée et qui est portée à plus de 60 C°.

-Vulnérabilité à l'encrassement des électrodes de traitement par une eau boueuse en réduisant notablement l'éfficacité desdites électrodes.

-Un contact électrique et physique direct avec l'eau,une détection du passage d'eau par un flotteur sensible à l'encrassement de gravillion et de boue.

L'invention supprime ces inconvénients et a notamment pour but de proposer un traitement de l'eau éfficace même si celle-ci est portée au voisinage de 80 C°. L'invention consiste en l'application d'un chéma électronique appliqué à un principe de traitement de l'eau par onde radiomagnétique et par la conçeption mécanique du bloc de traitement de l'eau en matière plastique. La conçeption mécanique a pour but d'apporter les avantages suivants par rapport aux systèmes existant:

1-Des orifices de passages d'eau dirigés par le bas afin de protéger les circuits électoniques d'éventuelles fuites d'eau.

2-D'une tige isolée de l'eau par un isolant électrique afin d'une part de créer les ondes radiomagnétiques,d'autre part d'isoler l'électricité de l'eau.

3-D'un flotteur qui détecte le passage de l'eau conçu selon la description donné ci-après et qui offre l'avantage d'être insensible au blocage et d'être autonettoyant vis-à-vis des boues et des impuretées véhiculées par l'eau traitée.

4-Une grande fiabilité,obtenue par un fonctionnement avec un élément isolé électriquement de l'eau,celui-ci,quelque soit le degré d'impureté de l'eau garde une puissance d'éfficacité constante.

5-D'une absence de nettoyage de quelque élément que ce soit du fait de l'utilisation d'onde radiomagnétique.

Le bloc de matière platique est constituer:

1-D'ouverture A et B diriger par le bas,l'ouverture A donnant en direct sur le flotteur et B sur la chambre d'ionisation.

2-D'un orifice E permettant de loger le senseur électronique chargé de détecté la position dudit flotteur.

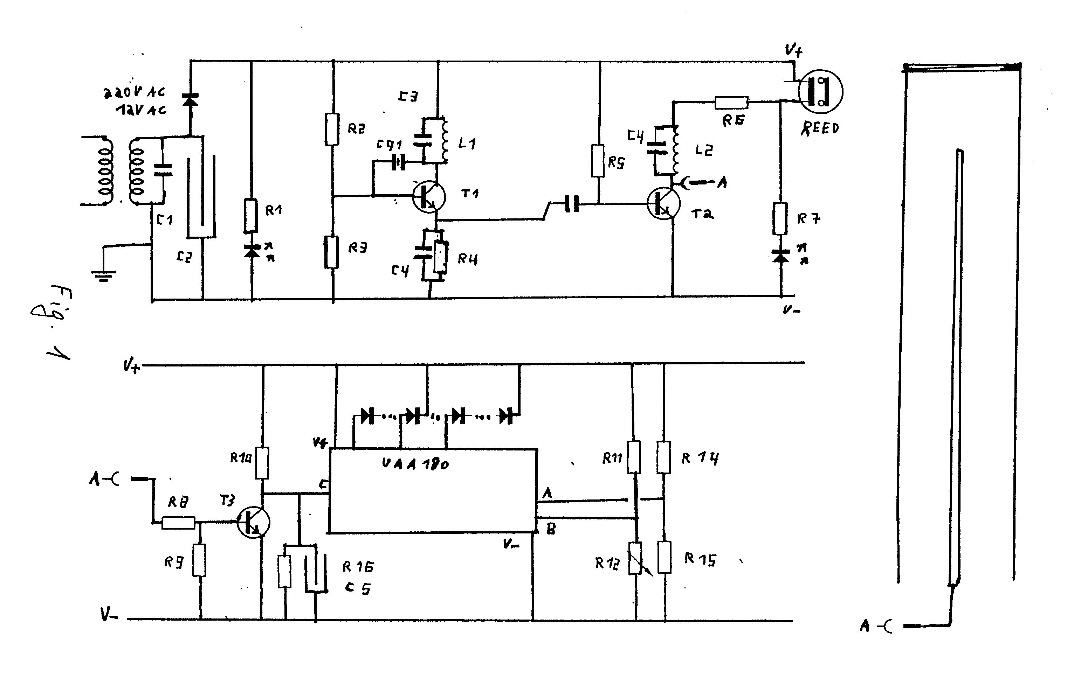

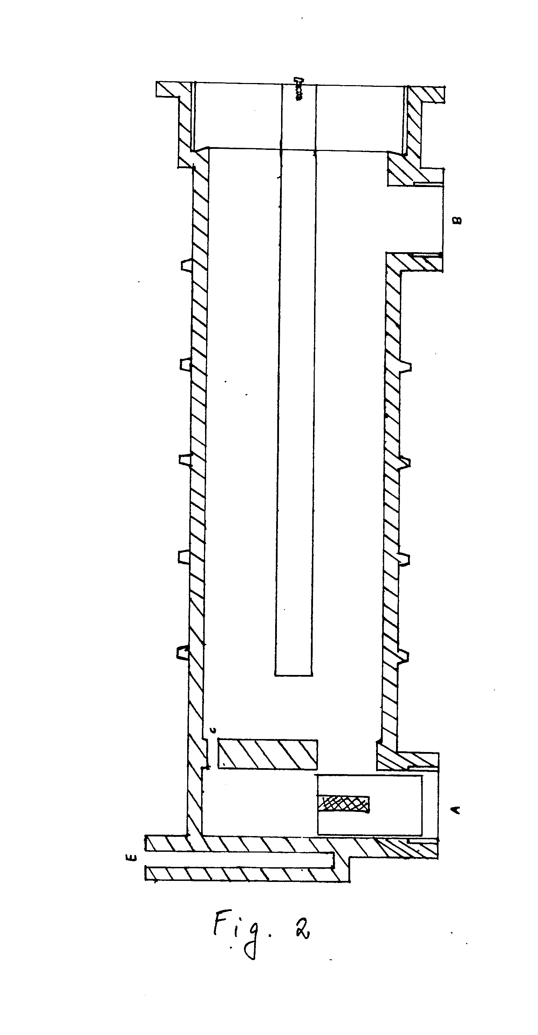

3-L'entrée A (voir fig.1) est étudié de façon a ce que l'eau pousse le flotteur D vers le haut en laissant échapper l'eau et les impuretées emprisonnées dans la cavitée au dessus de lui par l'orifice C.

4-Cette disposition du flotteur élimine le risque de blocage de celui-ci par de la boue ou impuretées de l'eau du fait de l'évacuation des impuretées par l'orifice C et du fait que le flotteur reçoit intégralement la force de poussée de l'eau a sa base.

5-Ce flotteur en remontant dégage une lumière d'échappement de l'eau donnant directement sur la chambre de traitement,ce qui rend la pose d'un filtre superflu car toute impuretée de moins de 7mm passe par l'appareil sans que celui-ci puisse être endommagé.

6-D'une chambre d'ionisation constituée d'une cavier cylindrique dans lequel se trouve plongée au centre une seule électrode immergée dans l'eau charger d'émmettre un champ d'électron libre,celle-ci est électriquement isoler de l'eau par un isolant électrique recouvrant la tige sur toute sa surface immerger.

7-L'évacuation de l'eau se fait par l'orifice B pratiquée sur le bas de ladite cavitée afin de complété les avantages du flotteur sur son immunitée aux impuretées,celle-ci étant chariée par le flot et évacuées par l'orifice B.

L'invention consiste principalement par le procédé de neutralisation du calcaire par l'application d'une onde de radiofréquence généré par le chémas électronique ci-joint,sur une tige en métal isolée sur toute sa surface immergée dans le liquide a traiter.

Ce procédér de traitement est éfficace jusqu'à plus de 80 C°.

Le procédé consiste en un générateur d'ondes radiomagnétique qui ont la particularitées de créer un champ d'électron libres destinés à compétée la structure des atomes de calcaires afin de les rendrent ioniquement neutre et ainsi de leurs hôter leurs effet incrutant.

Cet émmetteur étant branché à une tige en métal conducteur centrée dans un cylindre usiner dans un bloc de matière plastique.

Celui-ci peut également être branché sur une tige en métal centrée dans un cylindre de métal sans que cela ne modifie les effets de l'invention.

Le calcaire ainsi traité se présente sous la forme d'une poussière pulvérulente et inadérente même après chauffe àplus de 80 C°.

L'invention porte également sur l'application du chémas de cet émmetteur.

**Revendications**

1-Dispositif de traitement de l'eau constituer d'une tige en métal isolée sur toute sa surface immergée sur laquelle est appliqué une onde de radiofréquence générer par un émmetteur électronique.

2-Dispositif de détection de passage d'eau par flotteur autonettoyant.

3-Dispositif de traitement de l'eau constituer dans un bloc de matière plastique dont l'entrée et la sortie sont dirigées par le bas les rendants insensibles aux impuretées pouvant les obstruer.

4-Dispositif de traitement isoler électriquement de l'eau le rendant insensible à l'enrassement dudit dispositif par le calcaire traiter et par les impuretées de l'eau.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | BE-A- 485 768 (BRAKE et al.) <br> * Pages 5-7; figure 2 * <br> --- | 1 | C 02 F  1/46 |
| A | US-A-3 637 482 (G.L. VAJDA) <br> * Colonne 4, ligne 25 - colonne 5, ligne 12 * <br> --- | 1-4 | |
| A | FR-A-2 431 461 (SONIC-CLEAN) <br> * Revendications; figures 1,2 * <br> ----- | 1 | |

|  |  |  | DOMAINES TECHNIQUES RECHERCHES (Int. Cl.4) |
|---|---|---|---|
|  |  |  | C 02 F |

Le présent rapport a été établi pour toutes les revendications

| Lieu de la recherche | Date d'achèvement de la recherche | Examinateur |
|---|---|---|
| LA HAYE | 23-06-1988 | VAN AKOLEYEN H.T.M. |

EPO FORM 1503 03.82 (P0402)